# EUROPÄISCHE PATENTSCHRIFT

(11) **EP 1 763 647 B1**
(45) Veröffentlichungstag und Bekanntmachung des Hinweises auf die Patenterteilung: **11.03.2009**
(21) Anmeldenummer: 05752831.7
(22) Anmeldetag: 08.06.2005
(51) Int. Cl.: F16K 31/06, B60H 1/00

(54) **TAKTVENTIL**
CYCLE VALVE
SOUPAPE A RAPPORT CYCLIQUE D'OUVERTURE

(30) Priorität: 26.06.2004 DE 102004030976
(43) Veröffentlichungstag der Anmeldung: 21.03.2007
(73) Patentinhaber: ROBERT BOSCH GMBH, 70442 Stuttgart (DE)
(72) Erfinder: VOLLMER, Dirk, 77855 Achern (DE); WEIBLE, Reinhold, 70437 Stuttgart (DE)
(86) Internationale Anmeldenummer: PCT/EP2005/052630
(87) Internationale Veröffentlichungsnummer: WO 2006/000526

(56) Entgegenhaltungen:
- DE-A1- 3 310 021
- DE-A1- 19 754 257
- DE-A1- 19 836 562
- US-A- 4 878 650
- PATENT ABSTRACTS OF JAPAN Bd. 006, Nr. 106 (M-213), 10. Mai 1983 (1983-05-10) -& JP 58 028079 A (MATSUSHITA DENKI SANGYO KK), 18. Februar 1983 (1983-02-18)

## Beschreibung

### Stand der Technik

Die Erfindung geht von einem Taktventil nach dem Oberbegriff des Anspruchs 1 aus.

Taktventile werden u.a. zur wasserseitigen Steuerung der Heizleistung einer Fahrzeugheizung verwendet. Sie werden in der Regel durch Elektromagnete betätigt, die gegebenenfalls im Zusammenwirken mit einer Ventilfeder einen Schließkörper zwischen einer ersten und zweiten Schaltstellung gegebenenfalls periodisch hin und her bewegen. In der ersten Schaltstellung wird eine Durchflussverbindung zwischen einem Zulaufkanal und einem Ablaufkanal hergestellt, während in einer zweiten Schaltstellung der Durchfluss gesperrt ist. Das Taktventil ist in der Regel als so genanntes Sitzventil ausgebildet, bei dem beispielsweise ein Ventilkegel des Schließkörpers mit einem Ventilsitz zusammenarbeitet. Sitzventile sind robust und kostengünstig. Sie besitzen eine hohe Dichtigkeit. Allerdings erzeugt das schnelle Auftreffen des Ventilkegels auf den Ventilsitz und/oder des Hubmagnetsystems in der entgegengesetzten Richtung Luftschall und Körperschall. Diese Geräuschvibrationen beeinträchtigen den Komfort. Ferner belasten Druckspitzen die wasserführenden Bauteile im Kreislauf und können zu deren vorzeitigem Versagen führen, z.B. zu Leckagen und dgl.

Aus der DE 197 54 257 A1 ist ein solches Magnetventil für eine flüssigkeitsgeregelte Heiz- und/oder Kühlanlage bekannt. Ein Elektromagnet betätigt einen Schließkörper entgegen der Kraft einer Ventilfeder in Schließrichtung. Die Geschwindigkeit des Schließkörpers und des mit ihm verbundenen Ventilschafts wird durch eine Dämpfungseinrichtung verringert, die am Ventilschaft bzw. am Schließkörper angreift. Dadurch wird nicht nur verhindert, dass der Schließkörper bzw. der Ventilschaft nach dem Aufsetzen des Schließkörpers nachschwingt, sondern die Dämpfungseinrichtung bremst bereits die Geschwindigkeit von Magnetanker, Ventilschaft und Schließkörper während der Ventilbewegung. Die Dämpfungseinrichtung besitzt eine am Ventilschaft befestigte Scheibe aus einem Leichtbauwerkstoff, die in einem mit Flüssigkeit gefüllten Teil des Ventilgehäuses, z.B. einer Dämpfungskammer, mit geringem Spiel geführt ist. Bei der Bewegung der Dämpfungsscheibe wird die Flüssigkeit über einen Ringspalt von einer Seite der Dämpfungsscheibe zur anderen verdrängt. Das Dämpfungsverhalten kann durch zusätzliche Drosselbohrungen in der Dämpfungsscheibe abgestimmt werden. Um eine wirkungsvolle Dämpfung zu erreichen, ist es wichtig, den Ringspalt möglichst eng zu dimensionieren. Dadurch ist allerdings nicht auszuschließen, dass in der Flüssigkeit befindliche Schmutzteilchen sich im Ringspalt festsetzen oder sich im Dämpfungszylinder ansammeln, zu Verschleiß führen und die Funktion der Dämpfungseinrichtung beeinträchtigen.

Der Schließkörper ist in dem Ventilschaft mittels eines Führungszapfens begrenzt axial verschiebbar geführt. Der Flüssigkeitsdruck im Zulaufkanal verschiebt den Schließkörper in eine geöffnete Stellung, solange die Magnetspule nicht erregt ist. Ein elastisches Element in Form einer Schraubenfeder umgibt den Führungszapfen und den Ventilschaft und gelangt nach einem vorgegebenen Weg des Schließkörpers an einem Bund des Ventilschafts zur Anlage und damit zur Wirkung. Somit wirkt der Schließkörper als Rückschlagventil, wenn die Magnetspule nicht erregt ist. Bei erregter Magnetspule wird der Schließkörper über die Feder oder unmittelbar vom Ventilschaft gegen den Ventilsitz gedrückt. Die Schraubenfeder kann sich bereits am Bund des Ventilschafts abstützen, wenn die Magnetspule nicht erregt ist. In diesem Fall wirkt das Ventilglied als Druckventil, das öffnet, sobald der Flüssigkeitsdruck im Zulaufkanal auf das Ventilglied die Kraft der Schraubenfeder übersteigt. Somit wirkt die Dämpfungseinrichtung nicht auf den Schließkörper, wenn dieser als Rückschlagventil oder als Druckventil arbeitet, jedoch ist er während des gesamten Hubs wirksam, wenn dieser als Taktventil arbeitet. In dieser Funktion bewegt sich der Ventilschaft, mit dem die Dämpfungsscheibe fest verbunden ist, über den gesamten Hub des Schließkörpers.

### Vorteile der Erfindung

Nach der Erfindung ist bei einem Taktventil die hydraulische Dämpfung nur über einen gedämpften Teilbereich des Gesamthubs der Dämpfungsscheibe wirksam, wobei sich der Drosselspalt im Verlauf der Hubbewegung der Dämpfungsscheibe in einem Teilbereich erweitert. In dem ungedämpften Teilbereich der Hubbewegung, der in der Größenordnung von 0,5 Millimetern vor dem Schließen des Schließkörpers liegen kann, können Schmutzteilchen aus der hydraulischen Dämpfungseinrichtung ausgetragen werden, sodass Ablagerungen nicht entstehen und sich die Drosselquerschnitte selbst reinigen. Dadurch werden Verschleiß und Funktionsstörungen vermieden. Ferner können extrem enge Drosselspalten mit einer wirkungsvollen Dämpfung realisiert werden. Durch eine starke Dämpfung kann erreicht werden, dass bei kurzen Öffnungsimpulsen nicht mehr der Gesamthub genutzt wird. Es ergeben sich in vorteilhafter Weise eine verbesserte Auflösung und eine schnelle Reaktion bei kleinen Durchflussmengen. Die relativ langsamere Reaktionszeit bei größeren Durchflussmengen wird durch die geringere Verstärkung des Gesamtsystems kompensiert, z.B. Ventil- und Wärmetauschercharakteristik.

Der ungedämpfte Teilbereich kann gemäß einer Ausgestaltung der Erfindung dadurch erzielt werden, dass sich der Drosselquerschnitt anschließend an den gedrosselten Teilbereich im Verlauf der Hubbewegung des Schließkörpers vergrößert oder dass über einen ungedrosselten Teilbereich der Hubbewegung ein zum Drosselspalt parallel verlaufender Bypass aufgesteuert ist.

Zu diesem Zweck ist in vorteilhafter Weise der Schließkörper mit einer Dämpfungsscheibe verbunden, die in einem Dämpfungszylinder vorgesehen ist und mit diesem an ihrem Umfang einen Drosselspalt bildet, der sich im Verlauf der Hubbewegung des Schließkörpers und der Dämpfungsscheibe während eines Teilbereichs erweitert. Dies kann z.B. dadurch geschehen, dass der Dämpfungszylinder an einer Stirnseite offen ist und die Dämpfungsscheibe kurz vor dem Ende der Hubbewegung des Schließkörpers aus dem Dämpfungszylinder austritt, wodurch die Dämpfungswirkung aufgehoben wird. Da bis zum Aufsetzen des Schließkörpers auf den Ventilsitz nur noch ein kleiner Weg, etwa 0,5 mm, zurückzulegen ist, setzt er mit geringer Geschwindigkeit auf den Ventilsitz auf, weil er in Folge der Massenträgheit auf dieser kurzen Strecke nicht nennenswert beschleunigt werden kann.

Zwischen dem gedämpften Teilbereich und dem ungedämpften Teilbereich der Hubbewegung kann zweckmäßigerweise ein Übergangsbereich vorgesehen werden, in dem die Drosselwirkung vermindert ist. Dies kann beispielsweise dadurch erfolgen, dass sich der Strömungsquerschnitt des Dämpfungszylinders in einem Übergangsbereich an seinem offenen Ende stetig erweitert, z.B. indem der Dämpfungszylinder an seinem offenen Ende eine innere Fase aufweist. Die Kontur der Fase kann so ausgelegt werden, dass ein gewünschter Dämpfungsabfall erzielt wird. Ferner kann der Dämpfungszylinder an seinem offenen Ende mindestens eine innere Nut und/oder eine Ausnehmung aufweisen, die sich zur offenen Seite hin erweitern. Je nach gewünschtem Dämpfungsverlauf können über den Umfang verteilt mehrere Nuten und/oder Ausnehmungen vorgesehen werden. Dabei kann die Dämpfungscharakteristik im Übergangsbereich ebenfalls durch die Flanken der Nut bzw. durch die Kontur der Ausnehmung gestaltet werden, z.B. indem sie einen gebogenen Verlauf haben.

Nach einer Ausgestaltung der Erfindung wird vorgeschlagen, dass der Dämpfungszylinder in einem mittleren Bereich eine innere Ringnut aufweist, deren Breite größer ist als die Dicke der Dämpfungsscheibe. Dadurch erreicht man, dass der Schließkörper in seinen Endlagen optimal gedämpft ist, während in einer mittleren Lage in einem ungedämpften Bereich eine Durchspülung des Dämpfungszylinders über die Ringnut möglich ist. Auch hierbei ist es vorteilhaft, dass die Flanken der Ringnut Übergangsbereiche bilden, um Unstetigkeiten bei der Dämpfungscharakteristik zu vermeiden.

Anstelle der Ringnut kann auch ein Bypass vorgesehen werden, der an einer Stelle in dem Dämpfungszylinder mündet, an der der ungedämpfte Teilbereich beginnen soll. Der Bypass überbrückt den Drosselspalt im ungedämpften Teilbereich und sorgt für eine Durchspülung des Dämpfungszylinders.

Die Dämpfungscharakteristik kann durch die Form und Größe der Dämpfungsscheibe modifiziert werden. So kann die Dämpfungsscheibe an ihrem Umfang einen axial vorspringenden Rand aufweisen, durch den die axiale Erstreckung des Drosselspalts vergrößert wird. Ferner kann die Dämpfungsscheibe eine von der Kreisform abweichende Fläche aufweisen, z. B. die Fläche eines Ovals, einer Ellipse, eines regelmäßigen oder unregelmäßigen Vielecks oder eines Kreisabschnitts. Dadurch kann die Länge des Dichtspalts über den Umfang variiert werden. Außerdem lässt sich dadurch das Verhältnis des durch die Dämpfungsscheibe verdrängten Volumens zur Länge des Drosselspalts verändern. Ferner kann die Dämpfungsscheibe sehr dünn sein und eine feine Lochstruktur aufweisen. Die Löcher, deren Querschnitt zweckmäßigerweise im Mikrometerbereich liegen, werden bei der Hin- und Herbewegung der Dämpfungsscheibe frei gespült, wobei eine gewisse Elastizität der Dämpfungsscheibe und die damit verbundene geringe Durchbiegung ein Verstopfen der Drosselkanäle verhindern.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 einen schematischen Längsschnitt durch ein Taktventil,
Fig. 2 einen vergrößerten Längsschnitt eines Dämpfungszylinders,
Fig. 3 bis 5 Varianten zu Fig. 2,
Fig. 6 und 7 eine Draufsicht auf eine Dämpfungsscheibe und
Fig. 8 eine Variante zu Fig. 1

### Beschreibung der Ausführungsbeispiele

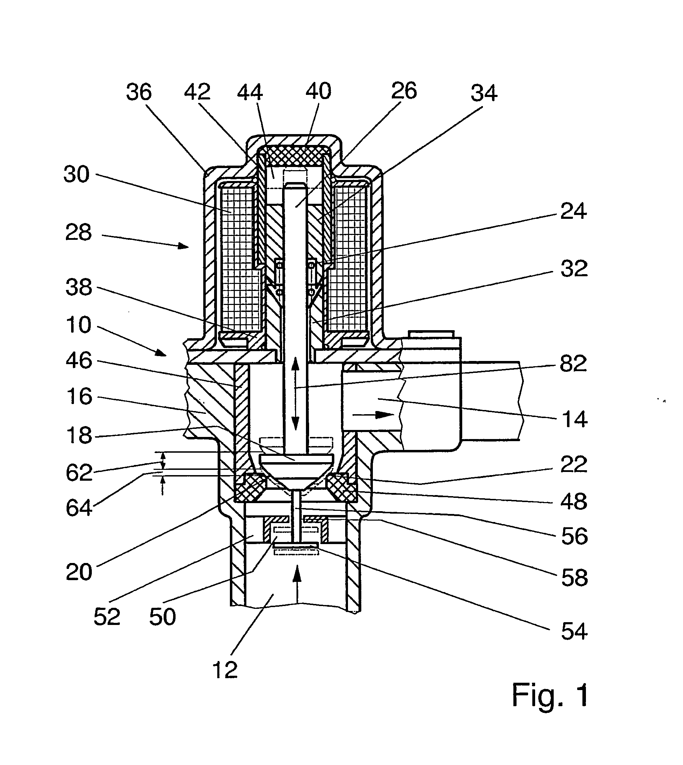

Ein Taktventil 10 besitzt ein Ventilgehäuse 16 mit einem Zulaufkanal 12 und einem Ablaufkanal 14. Der Durchfluss durch das Taktventil 10 wird von einem Schließkörper 18 gesteuert, dessen Ventilkegel 20 mit einem Ventilsitz 22 an einem Ventilsitzring 48 zusammenarbeitet, der in ein Ventilsitzgehäuse 46 im Ventilgehäuse 16 eingelassen ist. Bei der Betätigung des Schließkörpers 18 wird dieser periodisch zwischen einer geöffneten Stellung und einer Schließstellung hin und her bewegt, wobei er eine Hubbewegung 82 ausführt. In Fig. 1 ist eine Zwischenstellung des Schließkörpers 18 mit ausgezogenen Linien dargestellt, während die Schließstellung durch eine strichpunktierte Linie und die offene Stellung durch eine gestrichelte Linie angedeutet sind. Der Durchfluss pro Zeiteinheit wird im Wesentlichen durch das Verhältnis der Öffnungszeiten zu den Schließzeiten während der Betätigung des Taktventils bestimmt. Die Durchflussrichtung ist durch Pfeile gekennzeichnet. Das Taktventil 10 kann allerdings auch in entgegengesetzter Richtung durchströmt werden.

Mit dem Schließkörper 18 ist über eine Stange 56 eine Dämpfungsscheibe 54 verbunden. Um die bewegten Massen möglichst klein zu halten, kann sie dünn ausgebildet sein und aus einem Leichtbauwerkstoff bestehen, z.B. Kunststoff oder Verbundwerkstoff. Die Dämpfungsscheibe 54 arbeitet mit einem Dämpfungszylinder 50 zusammen, mit dem sie an ihrem Umfang einen Drosselspalt 70 bildet, wenn sie sich innerhalb des Dämpfungszylinders 50 bewegt. Dieser ist an einer Stirnseite bis auf eine Führungsöffnung 58 geschlossen, in der die Stange 56 geführt ist. Der Dämpfungszylinder 50, der über Rippen 52 im Zulaufkanal 12 befestigt ist (Fig. 1), ist auf die Stange 56 und die Dämpfungsscheibe 54 so abgestimmt, dass die hydraulische Dämpfung nur über einen Teil des Gesamthubs 60 wirksam ist. In einem gedämpften Teil 62 des Gesamthubs 60 befindet sich die Dämpfungsscheibe 54 bei der Ausführung nach Fig. 1 im Dämpfungszylinder 50, während sie sich in einem sich anschließenden ungedämpften Teil 64 außerhalb des Dämpfungszylinders 50 befindet, sodass der Innenraum des Dämpfungszylinders 50 über den vergrößerten Drosselspaltquerschnitt durchspült werden kann und eventuelle Schmutzteilchen entfernt werden. Dadurch ergeben sich ein geringerer Verschleiß und größere Ventilstandzeiten. Beim erneuten Öffnen des Schließkörpers 18 tritt die Dämpfungsscheibe 54 wieder in den Dämpfungszylinder 50 ein, sodass die gewünschte Dämpfung wieder erreicht wird.

Der Schließkörper 18 wird zweckmäßigerweise durch einen Elektromagneten 28 entgegen der Kraft einer Ventilfeder 24 in Schließrichtung betätigt. Bei Ausfall der Bestromung des Elektromagneten 28 wird der Schließkörper 18 geöffnet, sodass bei dem Einsatz in einem Heiz- und/oder Kühlkreislauf auf jeden Fall ein Durchfluss gewährleistet ist.

Der Elektromagnet 28 besitzt eine Magnetspule 30, die auf einem Rückschlussjoch 38 aufgewickelt ist. In dem Rückschlussjoch 38 sitzt eine Führungsbuchse 42, in der ein Anker 34 axial verschiebbar angeordnet ist und in Öffnungsrichtung durch die Ventilfeder 24 belastet wird. Der Anker 34 ist auf einem Ventilschaft 26 befestigt, der mit dem Schließkörper 18 und der Dämpfungsscheibe 54 verbunden ist. Bei der Bestromung der Magnetspule 30 wird der Anker 34 von einem Magnetkern 32 angezogen, sodass der Schließkörper 18 durch den Ventilschaft 26 gegen den Ventilsitz 22 gedrückt wird. Für die freie Bewegung des Ankers 34 ist in der Führungsbuchse 42 ein Ankerraum 44 vorgesehen, der an einem Ende beispielsweise durch einen elastischen Anschlag 40 begrenzt wird. Gegen diesen schlägt die freie Stirnfläche des Ventilschafts 26 in der geöffneten Stellung des Taktventils 10 an. Die Teile des Elektromagneten 28 sind in einem Gehäuse 36 untergebracht, das am Ventilgehäuse 46 befestigt ist. Obwohl Taktventile 10 in der Regel über Elektromagnete angetrieben werden, besteht auch die Möglichkeit, andere elektromotorische, mechanische oder hydraulische Aktuatoren zu verwenden.

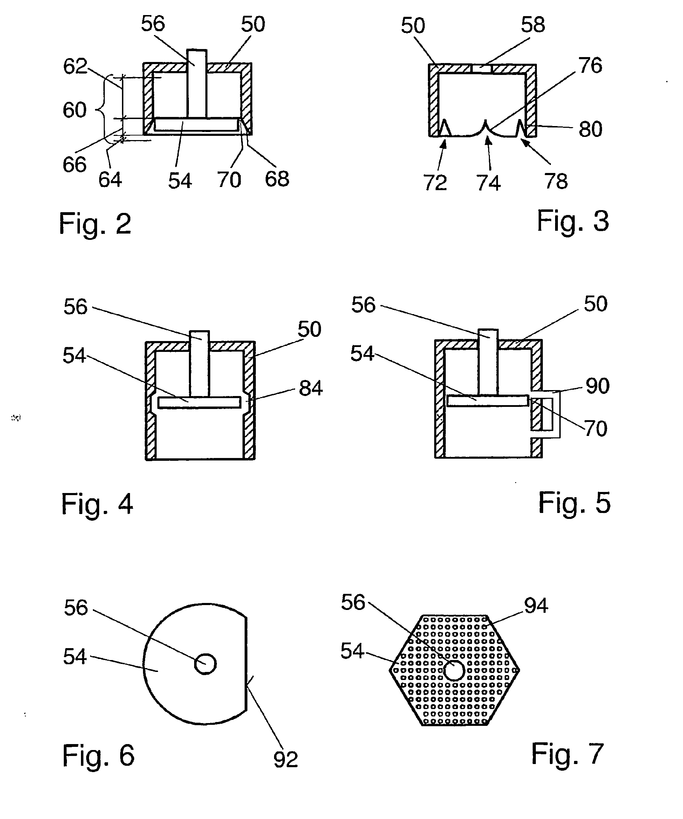

Bei der Ausführung nach Fig. 2 besitzt der Dämpfungszylinder 50 zwischen dem gedämpften Teil 62 und dem ungedämpften Teil 64 einen Übergangsbereich 66, in dem eine reduzierte, modifizierte Dämpfung erreicht wird. Über eine Fase 68 wird der Querschnitt des Drosselspalts 70 stetig erweitert, bis der ungedämpfte Bereich 64 erreicht wird. Die Fase 68 kann in axialer Richtung einen geraden oder gebogenen Verlauf aufweisen, z.B. einen konvexen oder konkaven Verlauf. Der Übergangsbereich 66 kann auch durch eine oder mehrere Nuten 72 gestaltet werden, durch die die Drosselwirkung des Drosselspalts 70 allmählich bis zum ungedrosselten Bereich 64 abnimmt. Dabei können die Flanken der Nut 72 ebenfalls gerade oder gebogen verlaufen. Eine ähnliche Wirkung kann durch Ausnehmungen 74 bzw. 78 erreicht werden, wobei die Ausnehmung 74 eine gebogene Begrenzungskontur 76 und die Ausnehmung 78 eine geradlinige Begrenzungskontur 80 aufweisen (Fig. 3). Somit kann die Dämpfungscharakteristik im Übergangsbereich 66 in weiten Grenzen modifiziert werden.

Bei der Ausführung nach Fig. 4 tritt die Dämpfungsscheibe 54 nicht aus dem Dämpfungszylinder 50 heraus. Hierbei liegt der ungedämpfte Teil 64 etwa in der Mitte des Gesamthubs 60, während die gedämpften Teile 62 an den Enden des Gesamthubs 60 vorgesehen sind. Der ungedämpfte Teil 64 wird durch eine Ringnut 84 realisiert, die im mittleren Bereich des Dämpfungszylinders 50 angeordnet und deren Breite größer ist als die Dicke der Dämpfungsscheibe 54. Durch den deutlich größeren Strömungsquerschnitt im Bereich der Ringnut 84 kann der Dämpfungszylinder 50 gut durchspült werden, sodass sich keine Schmutzteilchen festsetzen können. In diesem Fall kann durch die Gestaltung der Flanken der Ringnut 84 jeweils ein Übergangsbereich in den beiden Hubrichtungen gestaltet werden. Hierfür stehen ähnliche Möglichkeiten zur Verfügung, wie sie in Fig. 2 und Fig. 3 für den Endbereich des Dämpfungszylinders 50 dargestellt sind.

Anstelle der Ringnuten 84 kann ein Bypass 90 vorgesehen werden (Fig. 5), der am Anfang des ungedrosselten Teilbereichs in den Dämpfungszylinder 50 mündet und den Drosselspalt 70 am Umfang der Dämpfungsscheibe 54 überbrückt. Über den Bypass können Schmutzteilchen aus dem Dämpfungszylinder 50 ausgetragen werden.

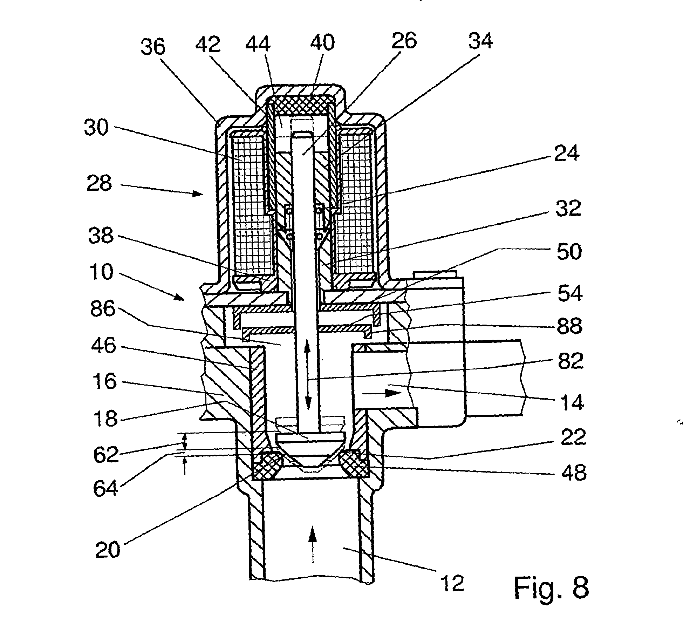

Die Dämpfungscharakteristik kann durch die Form und Größe der Dämpfungsscheibe modifiziert werden. In den Ausführungsbeispielen nach Fig. 6 und 7 weicht die Fläche der Dämpfungsscheibe 54 von einer Kreisform ab. Bei der Ausführung nach Fig. 6 weist die Dämpfungsscheibe 54 am Umfang eine Abflachung 92 auf, während die Dämpfungsscheibe 54 nach Fig. 7 ein regelmäßiges Sechseck darstellt. Es können aber auch andere Formen gewählt werden, z.B. ein Oval oder beliebige regelmäßige oder unregelmäßige Vielecke. Durch die Form der Fläche der Dämpfungsscheibe 54 kann zum einen das Verhältnis zwischen der Flächengröße und der Länge des Umfangs modifiziert werden, zum anderen kann die Dämpfungsscheibe 54 den zur Verfügung stehenden Bauraum optimal ausnutzen. So kann die Dämpfungsscheibe 54 bei einer Ausführung nach Fig. 8 in einem erweiterten Ventilraum 86 des Ventilgehäuses 16 untergebracht sein. Sie kann dadurch einen wesentlich größeren Durchmesser bzw. eine wesentlich größere Fläche aufweisen als der Schließkörper 18. Der Ventilraum 86 liegt bei der gewählten Durchflussrichtung des Taktventils 10 auf der Abströmseite des Schließkörpers 18. Ferner besitzt die Dämpfungsscheibe 54 einen axial vorspringenden Rand. Dadurch wird der Dichtspalt 70 am Umfang der Dämpfungsscheibe in dem gedämpften Teilbereich 62 in axialer Richtung länger. Da sich der Dichtspalt 70 beim Austritt der Dämpfungsscheibe 54 aus dem Dämpfungszylinder 50 kontinuierlich verkürzt, wird ebenfalls ein Übergangsbereich in der Dämpfcharakteristik erzeugt. Der Rand 88 erhöht die bewegte Masse der Dämpfungsscheibe 54 nur geringfügig.

Die Dämpfungscharakteristik der Dämpfungsscheibe 54 kann durch weitere Drosselöffnungen in Form von Löchern 94 weiter modifiziert werden. Die Dämpfungsscheibe 54 nach Fig. 7 zeigt eine feine Lochstruktur, bei der der Durchmesser der Löcher 94 im Mikrometerbereich liegen kann.

## Patentansprüche

1. Taktventil (10) mit einem Schließkörper (18), der mit einem Ventilsitz (22) zusammenarbeitet und in einer ersten Schaltstellung eine Durchflussverbindung zwischen einem Zulaufkanal (12) und einem Ablaufkanal (14) herstellt und in einer zweiten Schaltstellung sperrt, wobei der Schließkörper (18) während der Betätigung des Taktventils (10) periodisch zwischen den beiden Schaltstellungen wechselt und seine Bewegung hydraulisch durch einen Drosselspalt (70) gedämpft ist, und wobei der Schließkörper (18) mit einer Dämpfungsscheibe (54) verbunden ist, die in einem Dämpfungszylinder (50) vorgesehen ist und mit diesem an ihrem Umfang den Drosselspalt (70) bildet, **dadurch gekennzeichnet, dass** die hydraulische Dämpfung nur über einen gedämpften Teilbereich (62) des Gesamthubs (60) der Dämpfungsscheibe (54) wirksam ist, wobei sich der Drosselspalt (70) im Verlauf eines Teilbereichs (64, 66) der Hubbewegung (82) der Dämpfungsscheibe (54) erweitert.

2. Taktventil (10) nach Anspruch 1, **dadurch gekennzeichnet, dass** sich der Drosselspalt (70) anschließend an den gedämpften Teilbereich (62) im Verlauf der Hubbewegung (82) in der Größenordnung von 0,5 mm vor dem Schließen des Schließkörpers (18) vergrößert.

3. Taktventil (10) nach Anspruch 1, **dadurch gekennzeichnet, dass** über einen ungedämpften Teilbereich (64) der Hubbewegung (82) ein zum Drosselspalt (70) parallel verlaufender Bypass (90) aufgesteuert ist.

4. Taktventil (10) nach Anspruch 1 oder 2, **dadurch gekennzeichnet, dass** der Dämpfungszylinder (50) an einer Stirnseite offen ist und die Dämpfungsscheibe (54) kurz vor dem Ende ihrer Hubbewegung aus dem Dämpfungszylinder (50) austritt.

5. Taktventil (10) nach einem der Ansprüche 1 bis 4, **dadurch gekennzeichnet, dass** sich der Strömungsquerschnitt des Dämpfungszylinders (50) an seinem offenen Ende stetig erweitert.

6. Taktventil (10) nach Anspruch 5, **dadurch gekennzeichnet, dass** der Dämpfungszylinder (50) an seinem offenen Ende eine innere Fase (68) aufweist.

7. Taktventil (10) nach Anspruch 5, **dadurch gekennzeichnet, dass** der Dämpfungszylinder (50) an seinem offenen Ende mindestens eine innere Nut (72) und/oder Ausnehmung (74, 78) aufweist, die sich zur offenen Stirnseite hin erweitern.

8. Taktventil (10) nach Anspruch 7, **dadurch gekennzeichnet, dass** die Flanken der Nut (72) und die Kontur (76, 80) der Ausnehmung (74, 78) einen gebogenen Verlauf haben.

9. Taktventil (10) nach Anspruch 1, **dadurch gekennzeichnet, dass** der Dämpfungszylinder (50) in einem mittleren Bereich eine innere Ringnut (84) aufweist, deren Breite größer ist als die Dicke der Dämpfungsscheibe (50)an ihrem Umfang.

10. Taktventil (10) nach Anspruch 9, **dadurch gekennzeichnet, dass** die Flanken der Ringnut (84) Übergangsbereiche (66) bilden.

11. Taktventil (10) nach einem der vorhergehenden Ansprüche, **dadurch gekennzeichnet, dass** die Dämpfungsscheibe (54) am Umfang einen axial vorspringenden Rand (88) aufweist.

12. Taktventil (10) nach einem der vorhergehenden Ansprüche, **dadurch gekennzeichnet, dass** die Dämpfungsscheibe (54) eine von der Kreisform abweichende Fläche aufweist.

13. Taktventil (10) nach einem der vorhergehenden Ansprüche, **dadurch gekennzeichnet, dass** die Dämpfungsscheibe (54) sehr dünn ist und eine feine Lochstruktur aufweist.

14. Taktventil (10) nach Anspruch 13, **dadurch gekennzeichnet, dass** der Querschnitt der Löcher (94) im Mikrometerbereich liegt.

15. Taktventil (10) nach einem der vorhergehenden Ansprüche, **dadurch gekennzeichnet, dass** die Dämpfungsscheibe (54) koaxial zum Ventilschaft (26) in Strömungsrichtung vor dem Schließkörper (18) vorgesehen sind.

## Claims

1. Cyclic valve (10) with a closing body (18) which cooperates with a valve seat (22) and, in a first switching position, makes a throughflow connection between an inflow duct (12) and an outflow duct (14) and, in a second switching position, shuts off said throughflow connection wherein during the actuation of the cyclic valve (10) the closing body (18) alternates periodically between the two switching positions, and its movement is damped hydraulically by means of a throttle gap (70), and wherein the closing body (18) is connected to a damping disc (54) which is provided in a damping cylinder (50) and with the latter forms the throttle gap (70) on its circumference, **characterized in that** the hydraulic damping is effective only over a damped part-region (62) of the overall stroke (60) of the damping disc (54), the throttle gap (70) widening in the course of a part-region (64, 66) of the stroke movement (82) of the damping disc (54).

2. Cyclic valve (10) according to Claim 1, **characterized in that** the throttle gap (70), after the damped part-region (62), increases in size in the course of the stroke movement (82) in the order of magnitude of 0.5 mm before the closing of the closing body (18).

3. Cyclic valve (10) according to Claim 1, **characterized in that** a bypass (90) running parallel to the throttle gap (70) is opened over a non-damped part-region (64) of the stroke movement (82).

4. Cyclic valve (10) according to Claim 1 or 2, **characterized in that** the damping cylinder (50) is open on one end face, and the damping disc (54) emerges from the damping cylinder (50) shortly before the end of its stroke movement.

5. Cyclic valve (10) according to one of Claims 1 to 4, **characterized in that** the flow cross section of the damping cylinder (50) widens continuously at the open end of the latter.

6. Cyclic valve (10) according to Claim 5, **characterized in that** the damping cylinder (50) has an inner chamfer (68) at its open end.

7. Cyclic valve (10) according to Claim 5, **characterized in that** the damping cylinder (50) has at its open end at least one inner groove (72) and/or recess (74, 78) which widen/widens towards the open end face.

8. Cyclic valve (10) according to Claim 7, **characterized in that** the flanks of the groove (72) and the contour (76, 80) of the recess (74, 78) have a curved profile.

9. Cyclic valve (10) according to Claim 1, **characterized in that** the damping cylinder (50) has in the middle region an inner annular groove (84), the width of which is greater than the thickness of the damping disc (50) on its circumference.

10. Cyclic valve (10) according to Claim 9, **characterized in that** the flanks of the annular groove (84) form transitional regions (66).

11. Cyclic valve (10) according to one of the preceding claims, **characterized in that** the damping disc (54) has an axially projecting margin (88) on the circumference.

12. Cyclic valve (10) according to one of the preceding claims, **characterized in that** the damping disc (54) has a surface deviating from the circular shape.

13. Cyclic valve (10) according to one of the preceding claims, **characterized in that** the damping disc (54) is very thin and has a fine hole structure.

14. Cyclic valve (10) according to Claim 13, **characterized in that** the cross section of the holes (94) lies in the micrometre range.

15. Cyclic valve (10) according to one of the preceding claims, **characterized in that** the damping disc (54) is provided, coaxially with the valve stem (26), upstream of the closing body (18) in the direction of flow.

## Revendications

1. Soupape à rapport cyclique d'ouverture (10) comprenant un corps de fermeture (18) qui coopère avec un siège de soupape (22) et qui crée, dans une première position de commutation, une liaison d'écoulement entre un canal d'entrée (12) et un canal de sortie (14), et qui la bloque dans une deuxième position de commutation, le corps de fermeture (18), pendant l'actionnement de la soupape à rapport cyclique d'ouverture (10), alternant périodiquement entre les deux positions de commutation et son mouvement étant amorti hydrauliquement par une fente d'étranglement (70), et le corps de fermeture (18) étant connecté à un disque d'amortissement (54) qui est prévu dans un cylindre d'amortissement (50) et qui forme avec celui-ci, à sa périphérie, la fente d'étranglement (70), **caractérisée en ce que** l'amortissement hydraulique n'est efficace que sur une plage partielle amortie (62) de la course totale (60) du disque d'amortissement (54), la fente d'étranglement (70) s'élargissant dans l'étendue d'une région partielle (64, 66) du mouvement de course (82) du disque d'amortissement (54).

2. Soupape à rapport cyclique d'ouverture (10) selon la revendication 1, **caractérisée en ce que** la fente d'étranglement (70) augmente à la suite de la région partielle amortie (62) dans l'étendue du mouvement de la course (82) d'un ordre de grandeur de 0,5 mm avant la fermeture du corps de fermeture (18).

3. Soupape à rapport cyclique d'ouverture (10) selon la revendication 1, **caractérisée en ce qu'**une dérivation (90) s'étendant parallèlement à la fente d'étranglement (70) est commandée sur une région partielle non amortie (64) du mouvement de la course (82).

4. Soupape à rapport cyclique d'ouverture (10) selon la revendication 1 ou 2, **caractérisée en ce que** le cylindre d'amortissement (50) est ouvert au niveau d'un côté frontal et le disque d'amortissement (54) sort du cylindre d'amortissement (50) juste avant la fin de son mouvement de course.

5. Soupape à rapport cyclique d'ouverture (10) selon l'une quelconque des revendications 1 à 4, **caractérisée en ce que** la section transversale d'écoulement du cylindre d'amortissement (50) s'élargie constamment au niveau de son extrémité ouverte.

6. Soupape à rapport cyclique d'ouverture (10) selon la revendication 5, **caractérisée en ce que** le cylindre d'amortissement (50) présente à son extrémité ouverte un biseau interne (68).

7. Soupape à rapport cyclique d'ouverture (10) selon la revendication 5, **caractérisée en ce que** le cylindre d'amortissement (50) présente au niveau de son extrémité ouverte au moins une rainure interne (72) et/ou un évidement (74, 78) qui s'élargissent vers le côté frontal ouvert.

8. Soupape à rapport cyclique d'ouverture (10) selon la revendication 7, **caractérisée en ce que** les flancs de la rainure (72) et le contour (76, 80) de l'évidement (74, 78) ont une allure cintrée.

9. Soupape à rapport cyclique d'ouverture (10) selon la revendication 1, **caractérisée en ce que** le cylindre d'amortissement (50) présente dans une région centrale une rainure annulaire interne (84) dont la largeur est supérieure à l'épaisseur du disque d'amortissement (50) au niveau de sa périphérie.

10. Soupape à rapport cyclique d'ouverture (10) selon la revendication 9, **caractérisée en ce que** les flancs de la rainure annulaire (84) forment des régions de transition (66).

11. Soupape à rapport cyclique d'ouverture (10) selon l'une quelconque des revendications précédentes, **caractérisée en ce que** le disque d'amortissement (54) présente à sa périphérie un bord saillant axialement (88).

12. Soupape à rapport cyclique d'ouverture (10) selon l'une quelconque des revendications précédentes, **caractérisée en ce que** le disque d'amortissement (54) présente une surface s'écartant de la forme circulaire.

13. Soupape à rapport cyclique d'ouverture (10) selon l'une quelconque des revendications précédentes, **caractérisée en ce que** le disque d'amortissement (54) est très mince et présente une structure perforée fine.

14. Soupape à rapport cyclique d'ouverture (10) selon la revendication 13, **caractérisée en ce que** la section transversale des perforations (94) est de l'ordre du micron.

15. Soupape à rapport cyclique d'ouverture (10) selon l'une quelconque des revendications précédentes, **caractérisée en ce que** le disque d'amortissement (54) est prévu coaxialement à la tige de la soupape (26) dans la direction d'écoulement avant le corps de fermeture (18).
